# EUROPEAN PATENT APPLICATION

(11) **EP 4 844 832 A1**
(43) Date of publication of application: **25.11.2026**
(21) Application number: 26167865.0
(22) Date of filing: 26.03.2026
(51) Int. Cl.: H01M 4/38, H01M 4/36, H01M 4/62, H01M 10/0562

(54) **NEGATIVE ELECTRODE LAYER, BATTERY, SOLID-STATE BATTERY, AND METHOD OF PRODUCING NEGATIVE ELECTRODE LAYER**

(30) Priority: 21.05.2025 JP 2025084985
(71) Applicant: Toyota Jidosha Kabushiki Kaisha, Toyota-shi, Aichi-ken 471-8571 (JP)
(72) Inventor: NOMOTO, Kazushige, Toyota-shi, Aichi-ken 471-8571 (JP); FURUYA, Ryosuke, Toyota-shi, Aichi-ken 471-8571 (JP); NAKAI, Takaaki, Toyota-shi, Aichi-ken 471-8571 (JP); KUDO, So, Toyota-shi, Aichi-ken 471-8571 (JP); YOKOI, Yuma, Toyota-shi, Aichi-ken 471-8571 (JP)
(74) Representative: Winter, Brandl - Partnerschaft mbB

(57) **Abstract**

A negative electrode layer (22) contains composite particles (10). The composite particles (10) are particles in which a plurality of Si-based active materials (1) is aggregated. When the average major axis length of the Si-based active materials (1) is R1 and the average major axis length of the composite particles (10) is R2, the average major axis lengths R1 and R2 being obtained by observing a cross section of the negative electrode layer (22) and performing a measurement by a predetermined measurement method, the average major axis length R1 and the average major axis length R2 satisfy 0.03 ≤ (R1/R2) < 0.29.

## Description

### BACKGROUND OF THE INVENTION

### 1. Field of the Invention

The present disclosure relates to a negative electrode layer, a battery, a solid-state battery, and a method of producing a negative electrode layer.

### 2. Description of Related Art

In recent years, with the rapid spread of electronic devices such as personal computers and mobile phones, development of batteries to be used as power sources for such devices has been in progress. In addition, in the automotive industry, development of batteries to be used in hybrid electric vehicles (HEVs), plug-in hybrid electric vehicles (PHEVs), and battery electric vehicles (BEVs), for example, has been in progress. Active materials containing Si element (Si-based active materials) are known as electrode active materials.

For example, Japanese Unexamined Patent Application Publication No. 2019-121557 (JP 2019-121557 A) discloses a negative electrode layer including a negative electrode active material and a sulfide solid electrolyte, the negative electrode active material being composite particles including a binder and a plurality of particles containing Si element or Sn element, and having a porosity of 15% or less.

### SUMMARY OF THE INVENTION

Si has a large theoretical capacity and is effective in increasing the energy density of a battery. On the other hand, Si undergoes a large change in volume during charging and discharging. Therefore, the negative electrode layer containing the Si-based active material may also undergo a large change in volume during charging and discharging. When the amount of change in volume of the negative electrode layer is large, for example, a restraining member in the battery is required to have high strength and be large in size, which may result in a decrease in the energy density of the battery. In this regard, in JP 2019-121557 A, the amount of change in volume of the negative electrode layer is suppressed by forming composite particles of the Si-based active material together with a binder. However, there is room for further improvement in the amount of change in volume of the negative electrode layer.

The present disclosure provides a negative electrode layer with a reduced amount of change in volume.

### Aspect 1

Aspect 1 of the present disclosure relates to a negative electrode layer containing composite particles. The composite particles are particles in which a plurality of Si-based active materials is aggregated. When an average major axis length of the Si-based active materials is R1 and an average major axis length of the composite particles is R2, the average major axis lengths R1 and R2 being obtained by observing a cross section of the negative electrode layer and performing a measurement by a measurement method given below, the average major axis length R1 and the average major axis length R2 satisfy 0.03 ≤ (R1/R2) < 0.29. The measurement method includes acquiring the average major axis length R2 by measuring a major axis length r2 for each of the composite particles and averaging the major axis lengths r2, and acquiring the average major axis length R1 by selecting top 20% of the composite particles having a greatest major axis length r2 from the composite particles, measuring a maximum major axis length r1 of the Si-based active materials for each of the selected composite particles, and averaging the maximum major axis lengths r1.

### Aspect 2

In the negative electrode layer according to aspect 1, the average major axis length R1 and the average major axis length R2 may satisfy (R1/R2) ≤ 0.25.

### Aspect 3

In the negative electrode layer according to aspect 1 or 2, the average major axis length R1 may be 0.2 µm or more and 3.5 µm or less.

### Aspect 4

In the negative electrode layer according to aspect 1 or 2, the average major axis length R2 may be 4.5 µm or more and 13.0 µm or less.

### Aspect 5

In the negative electrode layer according to any one of aspects 1 to 4, the composite particles may contain a binder.

### Aspect 6

In the negative electrode layer according to any one of aspects 1 to 5, an aspect ratio of the composite particles may be 1.40 or more and 1.80 or less.

### Aspect 7

In the negative electrode layer according to any one of aspects 1 to 6, the Si-based active materials may have voids inside.

### Aspect 8

In the negative electrode layer according to any one of aspects 1 to 7, the negative electrode layer may contain an electrolyte and a conductive additive.

### Aspect 9

Aspect 9 of the present disclosure relates to a battery including: a positive electrode layer; a negative electrode layer; and an electrolyte layer disposed between the positive electrode layer and the negative electrode layer. The negative electrode layer is the negative electrode layer according to any one of aspects 1 to 8.

### Aspect 10

In the battery according to aspect 9, the electrolyte layer may contain a liquid electrolyte.

### Aspect 11

Aspect 11 of the present disclosure relates to a solid-state battery including: a positive electrode layer; a negative electrode layer; and a solid electrolyte layer disposed between the positive electrode layer and the negative electrode layer and containing a solid electrolyte. The negative electrode layer is the negative electrode layer according to any one of aspects 1 to 8.

### Aspect 12

Aspect 12 of the present disclosure relates to a method of producing a negative electrode layer, the negative electrode layer being the negative electrode layer according to any one of aspects 1 to 8. The method includes: preparing a negative electrode mixture containing the composite particles; and preparing the negative electrode layer using the negative electrode mixture.

The present disclosure has an effect of providing a negative electrode layer with a reduced amount of change in volume.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1A is a diagram illustrating a method of measuring R1 and R2 according to the present disclosure;
FIG. 1B is a diagram illustrating the method of measuring R1 and R2 according to the present disclosure;
FIG. 1C is a diagram illustrating the method of measuring R1 and R2 according to the present disclosure;
FIG. 1D is a diagram illustrating the method of measuring R1 and R2 according to the present disclosure;
FIG. 2A is a diagram illustrating the method of measuring R1 and R2 according to the present disclosure;
FIG. 2B is a diagram illustrating the method of measuring R1 and R2 according to the present disclosure;
FIG. 3 is a schematic cross-sectional view illustrating an example of a battery according to the present disclosure; and
FIG. 4 is a graph indicating the results of Example and Comparative Example.

### DETAILED DESCRIPTION OF EMBODIMENTS

A negative electrode layer, a battery, and a method of producing a negative electrode layer according to the present disclosure will be described in detail below. The drawings given below are schematic illustrations, and the size and shape of each part are exaggerated as appropriate to facilitate understanding.

### A. Negative Electrode Layer

The negative electrode layer according to the present disclosure contains composite particles. The composite particles are particles in which a plurality of Si-based active materials is aggregated. When the average major axis length of the Si-based active materials is R1 and the average major axis length of the composite particles is R2, the average major axis lengths being obtained by observing a cross section of the negative electrode layer and performing a measurement by the following measurement method, the average major axis length R1 and the average major axis length R2 satisfy 0.03 ≤ (R1/R2) < 0.29. In the measurement method, the average major axis length R2 is acquired by measuring a major axis length r2 for each of the composite particles and averaging the major axis lengths r2. The average major axis length R1 is acquired by selecting top 20% of the composite particles having the greatest major axis length r2 from the composite particles, measuring a maximum major axis length r1 of the Si-based active materials for each of the selected composite particles, and averaging the maximum major axis lengths r1.

According to the present disclosure, the average major axis length R1 of the Si-based active materials and the average major axis length R2 of the composite particles satisfy 0.03 ≤ (R1/R2) < 0.29, resulting in a negative electrode layer with a reduced amount of change in volume.

The inventors conducted an investigation with focus on the internal structure of the composite particles and found that there were cases where the amount of change in volume was not sufficiently reduced in composite particles containing primary particles (Si-based active materials) with an excessively large size (major axis length). This is presumed to be because as the Si-based active materials are larger, the change in volume (expansion amount, contraction amount) of the Si-based active materials is large, and the voids inside the composite particles were unable to fully absorb the change in volume of the large-sized Si-based active materials. The inventors also found that there were cases where the amount of change in volume was not sufficiently reduced also in composite particles containing primary particles with an excessively small size. This is presumed to be because the amount of voids inside the composite particles itself is reduced. The inventors conducted extensive research based on these findings, and discovered that by adjusting the average major axis length of the composite particles and the average major axis length of the Si-based active materials, it is possible to achieve a good balance between the amount of change in volume of the Si-based active materials and the amount of voids that can absorb this amount of change in volume inside the composite particles, and thus completed the present invention.

### 1. Composite Particles

In the composite particles according to the present disclosure, the average major axis length R1 of the Si-based active materials and the average major axis length R2 of the composite particles satisfy 0.03 ≤ (R1/R2) < 0.29. (R1/R2) may be 0.04 or more, 0.05 or more, 0.06 or more, 0.08 or more, 0.10 or more, 0.13 or more, or 0.15 or more. On the other hand, (R1/R2) may be 0.28 or less, 0.25 or less, 0.20 or less, or 0.15 or less.

The average major axis length R1 of the Si-based active materials and the average major axis length R2 of the composite particles are not particularly limited as long as the above-mentioned relationship is satisfied. R1 is 0.2 µm or more, for example, and may be 0.4 µm or more, 0.5 µm or more, 0.6 µm or more, 0.8 µm or more, 1.0 µm or more, 1.1 µm or more, 1.2 µm or more, or 1.5 µm or more. On the other hand, R1 is 3.5 µm or less, for example, and may be 3.2 µm or less, 3.0 µm or less, 2.5 µm or less, 2.0 µm or less, or 1.5 µm or less. The method of adjusting R1 will be described later.

R2 is 4.5 µm or more, for example, and may be 4.8 µm or more, 4.9 µm or more, 5.0 µm or more, 5.1 µm or more, 5.5 µm or more, 6.0 µm or more, 6.5 µm or more, 6.8 µm or more, 7.0 µm or more, 7.4 µm or more, 7.5 µm or more, 8.0 µm or more, 9.0 µm or more, or 10.0 µm or more. On the other hand, R2 is 13.0 µm or less, for example, and may be 12.6 µm or less, 12.5 µm or less, 12.0 µm or less, 11.5 µm or less, 11.1 µm or less, 11.0 µm or less, 10.6 µm or less, 10.2 µm or less, 10.1 µm or less, or 10.0 µm or less. The method of adjusting R2 will be described later.

Here, in the present disclosure, the average major axis length R1 of the Si-based active materials and the average major axis length R2 of the composite particles are determined by observing a cross section of the negative electrode layer and using the following measurement method. In the measurement method, the average major axis length R2 is acquired by measuring a major axis length r2 for each of the composite particles and averaging the major axis lengths r2. The average major axis length R1 is acquired by selecting top 20% of the composite particles having the greatest major axis length r2 from the composite particles, measuring a maximum major axis length r1 of the Si-based active materials for each of the selected composite particles, and averaging the maximum major axis lengths r1.

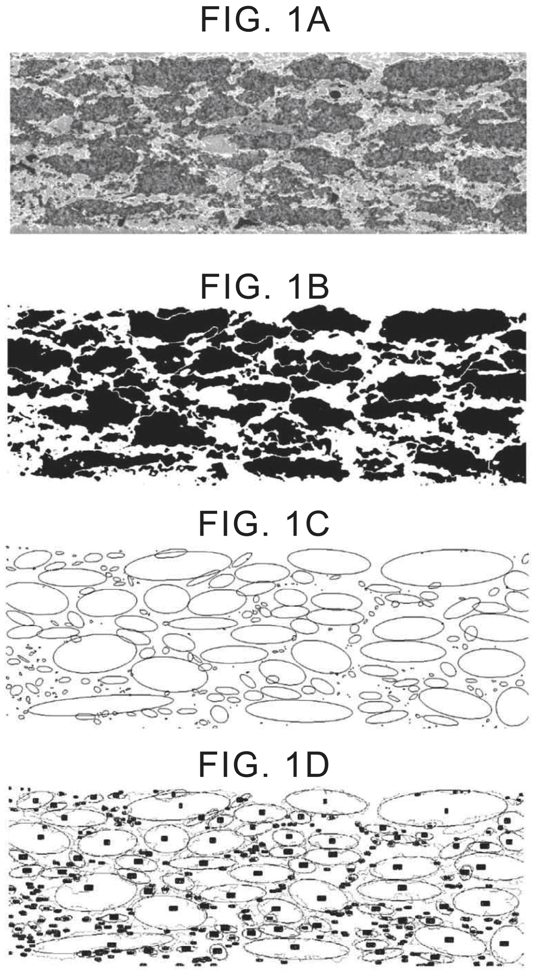

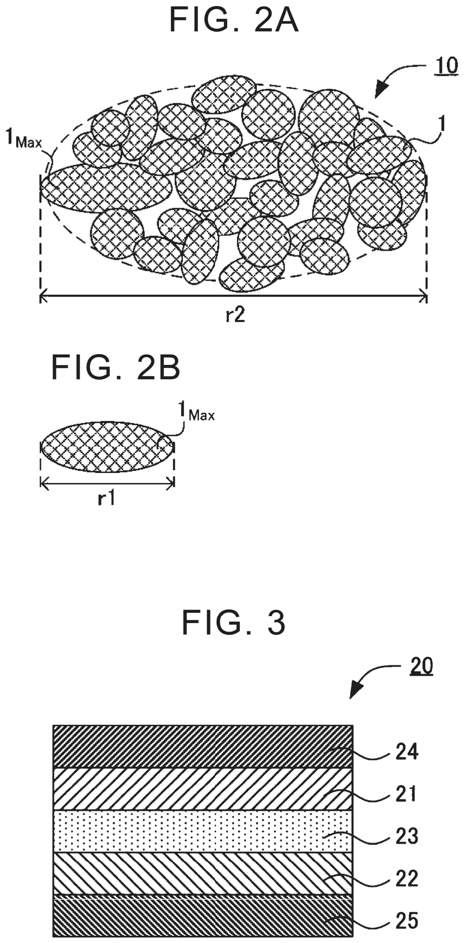

The method of measuring R1 and R2 will be described in detail with reference to FIGS. 1A to 1D and 2A and 2B. First, a method of measuring the average major axis length R2 of the composite particles will be described. As illustrated in FIG. 1A, a cross-sectional image of the negative electrode layer is acquired through observation using a microscope such as a scanning electron microscope (SEM), for example. Next, as illustrated in FIG. 1B, image analysis is performed on the cross-sectional image, and the image is binarized into composite particle portions (black) and portions (white) other than composite particles. The composite particle portions and the other portions can be distinguished by elemental analysis such as SEM-EDX, for example. Next, as illustrated in FIG. 1C, in the binarized image, the composite particle portions are approximated to ellipses using image analysis software. Then, as illustrated in FIGS. 1D and 2A, a major axis length r2 is acquired for a plurality of composite particles 10 that approximate an ellipse. Then, the major axis length r2 of the composite particles 10 is averaged to acquire an average major axis length R2.

The number of composite particles to be used in the measurement is 10 or more, for example, and may be 20 or more, 30 or more, 50 or more, or 100 or more. The observation field of the SEM image is preferably a field that includes the above number or more of composite particles. The observation field of the SEM image is 1000 µm² or more and 50000 µm² or less, for example. Examples of the image analysis software include ImageJFiji.

Here, when 100 composite particles are observed in the observation field of the SEM image, for example, the major axis length r2 may be measured for each of the 100 composite particles, and the average value thereof may be acquired as R2. Alternatively, the top 50 composite particles having the greatest major axis length r2 may be selected from the 100 composite particles, and the average value of the major axis length r2 of the selected composite particles may be acquired as R2.

Next, a method of measuring the average major axis length R1 of the Si-based active materials will be described. First, from the composite particles that are used in the measurement of the average major axis length R2, the top 20% of the composite particles having the greatest major axis length r2 are selected. For example, when R2 is the average value of r2 of 50 composite particles, the top 10 composite particles with the greatest r2 are selected from the 50 composite particles. Then, as illustrated in FIGS. 2A and 2B, the major axis length of the Si-based active materials 1 contained in each of the selected composite particles 10 is measured. As with the composite particles, it is preferable to binarize a composite particle into Si-based active material portions and the other portions, approximate the Si-based active material portions to ellipses, and measure the major axis length of the Si-based active material portions. Then, for each composite particle, the major axis length of an Si-based active material 1_{Max} having the greatest major axis length is acquired as a maximum major axis length r1. Then, the average value of the maximum major axis length r1 is acquired as an average major axis length R1 of the Si-based active materials.

### (1) Si-based Active Material

The composite particles according to the present disclosure contain an Si-based active material. Examples of the Si-based active material include elemental Si, Si alloys, and Si oxides. Examples of the Si alloys include Si-Al based alloys, Si-Sn based alloys, Si-In based alloys, Si-Ag based alloys, Si-Pb based alloys, Si-Sb based alloys, Si-Bi based alloys, Si-Mg based alloys, Si-Ca based alloys, Si-Ge based alloys, and Si-Pb based alloys. The Si alloy may be a binary alloy or a multi-component alloy of three or more components. The Si alloy preferably contains Si element as a main component. Examples of the Si oxides include SiO.

The Si-based active material is usually in the form of primary particles. The Si-based active material may be solid particles, or may be porous particles (porous Si) having voids inside (inside the primary particles). The voids inside the primary particles can be observed with a scanning electron microscope (SEM). The porosity of the primary particles is not particularly limited, and is 4% or more, for example, and may be 10% or more. The above porosity is 40% or less, for example, and may be 20% or less. The porosity can be determined by the following procedure, for example. First, a cross-sectional image of the Si-based active material is acquired with an SEM. A silicon portion and a void portion are distinguished from the acquired image by using image analysis software and binarized. The areas of the silicon portion and the void portion are determined, and the porosity (%) is calculated using the following formula. 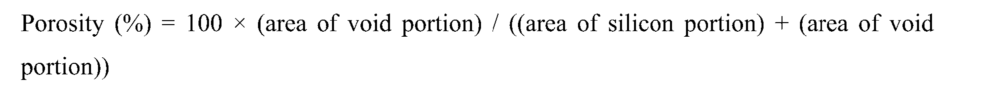 Porosity (%) = 100 × (area of void portion) / ((area of silicon portion) + (area of void portion))

The pore diameter of the porous Si is not particularly limited, and is 10 nm or more and 100 nm or less, for example. In addition, in the primary particles, the void volume of voids having a pore diameter of 50 nm or less is 0.05 cc/g or more and 0.30 cc/g or less, for example.

Examples of the method of preparing the porous Si include a method of producing an alloy of Li and Si (Li-Si alloy) and then removing Li from the Li-Si alloy. The Li-Si alloy is obtained by mixing Li and Si, for example. Examples of the method of removing Li from the Li-Si alloy include a method of causing the Li-Si alloy to react with an Li extraction agent. Examples of the Li extraction agent include alcohols such as methanol and acids such as acetic acid.

The Si-based active material may be crystalline or amorphous. When the Si-based active material is crystalline, the Si-based active material typically has an Si crystal phase. Examples of the Si crystal phase include a diamond-type crystal phase. Common Si contains a diamond-type crystal phase as the Si crystal phase. The Si-based active material may contain a diamond-type crystal phase as the main phase of the Si crystal phase.

Other examples of the Si crystal phase include a silicon clathrate-type crystal phase. The silicon clathrate-type crystal phase may be a silicon clathrate I-type crystal phase or a silicon clathrate II-type crystal phase. In the silicon clathrate-type crystal phase, a plurality of Si elements forms a polyhedron (cage) including a pentagon or a hexagon. The polyhedron has an internal space that can contain metal ions such as Li ions. By inserting metal ions into the space, the change in volume due to charging and discharging can be suppressed. The Si-based active material may contain a silicon clathrate I-type crystal phase or a silicon clathrate II-type crystal phase as the main phase of the Si crystal phase.

The number of Si-based active materials contained in the composite particles is 10 or more and 300 or less, for example.

### (2) Other Components

The composite particles according to the present disclosure may contain a binder. That is, the composite particles according to the present disclosure may be particles in which a plurality of the above Si-based active materials is aggregated together with a binder.

The type of the binder in the composite particles is not particularly limited. Examples of the binder include rubber-based binders such as butadiene rubber (BR) and styrene butadiene rubber (SBR), and fluoride-based binders such as polyvinylidene fluoride (PVdF). The composite particles may contain one type of binder or two or more types of binders.

The content of the binder in the composite particles is not particularly limited, and is 1% by weight or more and 30% by weight or less, for example.

### (3) Composite Particles

The aspect ratio (major axis length/minor axis length) of the composite particles is not particularly limited, and is 1.40 or more, for example, and may be 1.45 or more, 1.50 or more, 1.55 or more, 1.58 or more, or 1.60 or more. On the other hand, the aspect ratio is 1.80 or less, for example, and may be 1.75 or less, 1.70 or less, 1.66 or less, 1.65 or less, or 1.60 or less. The average major axis length R2 of the composite particles described above can be used as the major axis length of the composite particles. Furthermore, an average minor axis length of the plurality of composite particles selected in measuring R2 can be used as the minor axis length of the composite particles.

Here, it is assumed that when the composite particles are viewed in cross section, the portion containing the Si-based active materials is defined as a first portion and the portion not containing the Si-based active materials is defined as a second portion. Then, it is preferable that the proportion of the area of the second portion to the total of the area of the first portion and the area of the second portion is within a predetermined range. The above proportion is 10% or more, for example, and may be 20% or more or 30% or more. On the other hand, the above proportion is 60% or less, for example, and may be 55% or less, 50% or less, 45% or less, or 40% or less. The second portion generally refers to a portion that is formed between adjacent Si-based active materials and contains voids or a binder. When the Si-based active materials have voids inside, the voids inside the Si-based active materials are included in the first portion.

The proportion of the composite particles in the negative electrode layer is not particularly limited, and is 60% by weight or more and 90% by weight or less, for example. When the content of the composite particles is too low, a sufficient battery capacity may not be obtained. On the other hand, when the content of the composite particles is too high, sufficient electronic conductivity and ionic conductivity may not be obtained.

Examples of the method of preparing the composite particles include a spray drying method. The spray drying method is a method including spraying a slurry containing at least the above-mentioned Si-based active materials into hot air and evaporating a liquid in the slurry to prepare composite particles in which the Si-based active materials are aggregated.

R1 can be changed by adjusting the average particle size (D₅₀) of the Si-based active materials. The particle size can be adjusted by crushing the Si-based active materials using a ball mill, for example. Usually, as D₅₀ is smaller, R1 is also smaller.

In addition, in preparing the composite particles, two types of Si-based active materials having different average particle sizes may be used.

Furthermore, R2 can be changed by adjusting the NV of the slurry, the slurry delivery amount, and the drying temperature, for example. In the present disclosure, the NV value (Non-Volatile Content) refers to the weight ratio of a non-volatile content (solid components) contained in the slurry. For example, R2 can be adjusted in the direction of increasing by increasing the NV of the slurry. R2 can be adjusted in the direction of increasing by increasing the slurry delivery amount. R2 can be adjusted in the direction of increasing by increasing the drying temperature.

The NV of the slurry is 5% or more and 30% or less, for example, the slurry delivery amount is 100 g/hour or more and 200 g/hour or less, for example, and the drying temperature is 120°C or more and 200°C or less, for example.

### 2. Negative Electrode Layer

The negative electrode layer according to the present disclosure may contain, in addition to the composite particles described above, at least one of a conductive additive, a binder, and an electrolyte.

Examples of the conductive additive include carbon materials, metal particles, and conductive polymers. Examples of the carbon materials include particulate carbon materials such as acetylene black (AB) and ketjen black (KB), and fibrous carbon materials such as carbon fiber, carbon nanotube (CNT), and carbon nanofiber (CNF). The proportion of the conductive additive in the negative electrode layer is 0.1% by weight or more and 10% by weight or less, for example.

As the type of the binder, the same binder as that for the composite particles described above can be used. The proportion of the binder in the negative electrode layer (excluding the binder in the composite particles) is not particularly limited, and is 1% by weight or more and 10% by weight or less, for example.

The type of the electrolyte will be described in "B. Battery". The proportion of the electrolyte in the negative electrode layer is 10% by weight or more and 60% by weight or less, for example.

The thickness of the negative electrode layer is not particularly limited, and is 30 µm or more and 1000 µm or less, for example.

### B. Battery

FIG. 3 is a schematic sectional view illustrating an example of a battery according to the present disclosure. As illustrated in FIG. 3, a battery 20 includes a positive electrode layer 21, a negative electrode layer 22, and an electrolyte layer 23 disposed between the positive electrode layer 21 and the negative electrode layer 22. The battery 20 also includes a positive electrode current collector 24 and a negative electrode current collector 25. In the battery 20, the negative electrode layer 22 is the negative electrode layer according to the present disclosure described above. Although not specifically illustrated, in the solid-state battery, the electrolyte layer 23 is a solid electrolyte layer.

According to the present disclosure, the negative electrode layer described above is provided, resulting in a battery and a solid-state battery with a reduced amount of change in volume.

### 1. Negative Electrode Layer

The negative electrode layer is the same as that described in "A. Negative Electrode Layer", and therefore is not described here.

### 2. Positive Electrode Layer

The positive electrode layer contains at least a positive electrode active material. Furthermore, the positive electrode layer may contain at least one of a conductive additive, a binder, and an electrolyte as necessary.

Examples of the positive electrode active material include an oxide active material. Examples of the oxide active material include layered rock-salt active materials such as LiCoO₂, LiNi_{1/3}CO_{1/3}Mn_{1/3}O₂, and LiNi_{0.8}Co_{0.15}Al_{0.05}O₂, spinel active materials such as LiMn₂O₄ and Li₄Ti₅O₁₂, and olivine active materials such as LiFePO₄.

A coating layer containing an Li-ion conductive oxide may be formed on the surface of the oxide active material. This is because the reaction between the oxide active material and a solid electrolyte (particularly a sulfide solid electrolyte) can be suppressed. Examples of the Li-ion conductive oxide include LiNbO₃, Li₄Ti₅O₁₂, and Li₃PO₄.

The positive electrode active material is in the form of particles, for example. The average particle size D₅₀ of the positive electrode active material is 0.5 µm or more and 50 µm or less, for example. The average particle size (D₅₀) refers to the particle size corresponding to a cumulative frequency of 50% in the particle size distribution. The average particle size may be a value measured by a laser diffraction/scattering particle size distribution measurement method, or may be a value measured by image analysis using software.

The conductive additive, the binder, and the solid electrolyte are the same as those described in "A. Negative Electrode Layer".

The thickness of the positive electrode layer is not particularly limited, and is 1 µm or more and 1000 µm or less, for example.

### 3. Electrolyte Layer

The electrolyte layer is a layer disposed between the positive electrode layer and the negative electrode layer, and contains at least an electrolyte. The electrolyte layer may contain a liquid electrolyte (electrolytic solution) or a solid electrolyte. An electrolyte layer containing a solid electrolyte is called a solid electrolyte layer. In addition, a battery including a solid electrolyte layer is generally called a solid-state battery. The solid-state battery may be a semi-solid-state battery or an all-solid-state battery. A battery including a solid electrolyte layer containing only an inorganic solid electrolyte as the solid electrolyte corresponds to an all-solid-state battery.

The electrolytic solution may be any of the conventionally known electrolytic solutions that are used in batteries. Specifically, an electrolytic solution containing a lithium salt such as LiPF₆ and a non-aqueous solvent such as ethylene carbonate (EC), dimethyl carbonate (DMC), and ethyl methyl carbonate (EMC) can be mentioned. When an electrolytic solution is contained as the electrolyte, the electrolyte layer may be a layer in which a separator is impregnated with the electrolytic solution. The separator may be a conventionally known member.

Examples of the solid electrolyte include inorganic solid electrolytes such as a sulfide solid electrolyte, an oxide solid electrolyte, a nitride solid electrolyte, a halide solid electrolyte, and a complex hydride. Among these, the sulfide solid electrolyte is particularly preferable. This is because the sulfide solid electrolyte has high ionic conductivity. The sulfide solid electrolyte typically contains sulfur (S) as a main component of anionic elements. The oxide solid electrolyte, the nitride solid electrolyte, and the halide solid electrolyte typically contain oxygen (O), nitrogen (N), and halogen (X), respectively, as a main component of anionic elements.

The sulfide solid electrolyte preferably contains Li element, X element (X is at least one of P, As, Sb, Si, Ge, Sn, B, Al, Ga, and In), and S element, for example. The sulfide solid electrolyte may further contain at least one of an O element and a halogen element.

Examples of the sulfide solid electrolyte include Li₂S-P₂S₅, Li₂S-P₂S₅-LiI, Li₂S-P₂S₅-GeS₂, Li₂S-P₂S₅-Li₂O, Li₂S-P₂S₅-Li₂O-LiI, Li₂S-P₂S₅-LiI-LiBr, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numbers, and Z is any one of Ge, Zn, and Ga), Li₂S-GeS₂, Li₂S-SiS₂-Li₃PO₄, and Li₂S-SiS₂-LiₓMO_{y} (where x and y are positive numbers, and M is any one of P, Si, Ge, B, Al, Ga, and In).

The solid electrolyte may also include organic solid electrolytes such as polymer electrolytes and gel electrolytes.

The solid electrolyte may be glassy or may have a crystal phase. Examples of the crystal phase include a Thio-LISICON-type crystal phase, an Argyrodite-type crystal phase, and an LGPS-type crystal phase. The solid electrolyte is in the form of particles, for example. The average particle size of the solid electrolyte is 0.01 µm or more and 10 µm or less, for example. The ionic conductivity of the solid electrolyte at 25°C is 1×10⁻⁴ S/cm or more, for example, and may be 1×10⁻³ S/cm or more.

The electrolyte layer may also contain a binder as necessary. Examples of the binder include the binders described in "A. Negative Electrode Layer". The thickness of the electrolyte layer is not particularly limited, and is 1 µm or more and 1000 µm or less, for example.

### 4. Negative Electrode Current Collector and Positive Electrode Current Collector

The negative electrode current collector is a member that collects electrons from the negative electrode layer, and the positive electrode current collector is a member that collects electrons from the positive electrode layer. Examples of the material of the positive electrode current collector include SUS, aluminum, nickel, iron, titanium, and carbon. Examples of the material of the negative electrode current collector include SUS, copper, nickel, and carbon. A coating layer containing at least one of Ni, Cr, and C may be formed on the surface of the positive electrode current collector and the negative electrode current collector. The coating layer may be a plated layer or a vapor-deposited layer. The positive electrode current collector and the negative electrode current collector may be in the form of a foil, for example.

### 5. Battery

The battery according to the present disclosure may include an exterior body that houses the members described above. Examples of the exterior body include a laminate-type exterior body and a case-type exterior body. The battery according to the present disclosure may also include a restraining jig that applies a restraining pressure in the thickness direction to the members described above. A known jig can be used as the restraining jig. The restraining pressure is 0.1 MPa or more and 50 MPa or less, for example, and may be 1 MPa or more and 20 MPa or less.

The battery according to the present disclosure is typically a lithium ion secondary battery. The battery according to the present disclosure may also be a solid-state battery including a solid electrolyte layer. The battery according to the present disclosure may be a semi-solid-state battery or an all-solid-state battery. On the other hand, the battery according to the present disclosure may be a liquid battery containing an electrolytic solution. Examples of the application of the battery include a power source for vehicles such as hybrid electric vehicles (HEVs), plug-in hybrid electric vehicles (PHEVs), battery electric vehicles (BEVs), gasoline vehicles, and diesel vehicles. Furthermore, the battery according to the present disclosure may be used as a power source for mobile objects other than vehicles (for example, trains, ships, and aircrafts), and may be used as a power source for electrical appliances such as information processing devices.

### C. Method of Producing Negative Electrode Layer

The present disclosure can also provide a method of producing a negative electrode layer, the negative electrode layer being the negative electrode layer described above, the method including: a preparation step of preparing a negative electrode mixture containing the composite particles; and a layer formation step of forming the negative electrode layer using the negative electrode mixture.

### 1. Preparation Step

The preparation step is a step of preparing a negative electrode mixture containing the composite particles. The method of preparing the composite particles is the same as that described in "A. Negative Electrode Layer".

The negative electrode mixture may contain, in addition to the composite particles, at least one of a conductive additive, a binder, and an electrolyte. The conductive additive, the binder, and the electrolyte are the same as those described in "A. Negative Electrode Layer".

The negative electrode mixture may also contain a dispersion medium such as a solvent. Examples of the solvent include organic solvents such as butyl butyrate, dibutyl ether, heptane, and tetrahydrofuran. The negative electrode mixture may be in the form of a slurry or a powder.

### 2. Layer Formation Step

The layer formation step is a step of forming the negative electrode layer using the negative electrode mixture.

The negative electrode layer may be formed by a coating method or a pressing method. The negative electrode layer may be densified by pressing.

The negative electrode layer produced by the method described above is the same as that described in "A. Negative Electrode Layer".

The present disclosure is not limited to the above embodiment. The above embodiment is merely exemplary, and any structure that has substantially the same configuration as, and exhibits functions and effects similar to, the technical idea described in the claims of the present disclosure is included within the technical scope of the present disclosure.

### Example 1

### Preparation of Composite Particles

0.65 g of Si particles (manufactured by Kojundo Chemical Laboratory) and 0.60 g of Li metal (manufactured by Honjo Metal) were mixed in an agate mortar under an Ar atmosphere to obtain an LiSi precursor. In a glass reactor under an Ar atmosphere, 1.0 g of the LiSi precursor and 125 ml of a dispersion medium (1,3,5-trimethylbenzene, manufactured by Nacalai Tesque) were mixed using an ultrasonic homogenizer (UH-50, manufactured by SMT). The LiSi precursor dispersion obtained after mixing was cooled to 0°C, and 125 ml of ethanol (manufactured by Nacalai Tesque) as an Li extraction solvent was added dropwise, followed by reaction for 120 minutes. After the reaction, 50 ml of acetic acid (manufactured by Nacalai Tesque) was further added dropwise, and the reaction was continued for 60 minutes. After the reaction, the liquid and the solid reactant were separated by suction filtration. The resulting solid reactant was vacuum-dried at 120°C for 2 hours to recover Si-based active materials in the form of porous particles (porous Si; D₅₀ =5 µm). The obtained Si-based active materials (primary particles) were pulverized in a bead mill using zirconia beads to adjust the particle size such that the average major axis length R1 indicated in Table 1 was obtained.

The Si-based active materials with the adjusted particle size and styrene-butadiene rubber (SBR) were dispersed in dimethyl carbonate (manufactured by Nacalai Tesque) and partially dissolved to obtain a slurry. This slurry was sprayed into a spray dryer in a nitrogen gas atmosphere at 140°C and dried (spray drying method). The NV value of the slurry and the slurry delivery amount and the drying temperature in the spray drying method were adjusted such that the average major axis length R2 indicated in Table 1 was obtained. In this way, composite particles were prepared.

### Preparation of Negative Electrode

The composite particles, a binder (PVDF), a conductive additive (VGCF), and a sulfide solid electrolyte (Li₂S-P₂S₅-based sulfide solid electrolyte) were added to an organic solvent and kneaded using an ultrasonic homogenizer. In this way, a negative electrode slurry was prepared. The negative electrode slurry was applied to a negative electrode current collector (Cu foil) and dried. In this way, a negative electrode having a negative electrode current collector and a negative electrode layer was obtained.

### Preparation of Positive Electrode

A binder (PVDF), a conductive additive, a sulfide solid electrolyte, and a positive electrode active material (NCM: LiNi_{0.8}Co_{0.15}Mn_{0.05}O₂) were added to an organic solvent. After the addition, the mixture was kneaded using an ultrasonic homogenizer to obtain a positive electrode slurry. The obtained positive electrode slurry was applied to a positive electrode current collector (Al foil) and dried. In this way, a positive electrode having a positive electrode current collector and a positive electrode layer was obtained.

### Fabrication of Evaluation Battery

A binder (PVDF) and a sulfide solid electrolyte (Li₂S-P₂S₅-based sulfide solid electrolyte) were added to an organic solvent and kneaded using an ultrasonic homogenizer. In this way, a mixture slurry was obtained. The mixture slurry was applied to a substrate (Al foil) and dried. In this way, a transfer member having a substrate and a solid electrolyte layer was obtained.

The prepared positive electrode, negative electrode, and transfer member were each molded into a strip shape. Next, the positive electrode and the transfer member were stacked such that the positive electrode layer and the solid electrolyte layer faced each other, and then roll-pressed at 165°C and a pressure of 50 kN/cm. Thereafter, the substrate was peeled off to obtain a positive electrode member. The negative electrode and the transfer member were stacked such that the negative electrode layer and the solid electrolyte layer faced each other, and then roll-pressed at 25°C and a pressure of 50 kN/cm. Thereafter, the substrate was peeled off to obtain a negative electrode member. Next, the negative electrode member was punched out to a diameter of 13.00 mm, and the positive electrode member was punched out to a diameter of 11.28 mm. A sulfide solid electrolyte powder was disposed on the solid electrolyte layer of the punched negative electrode member, and then uniaxially pressed. Next, the negative electrode member and the positive electrode member were stacked such that the solid electrolyte layers faced each other, and current extraction tabs were attached to the positive and negative electrodes. Then, this was sealed in an aluminum laminate using a vacuum laminating sealer and restrained at a pressure of 5 MPa. In this way, an evaluation battery (all-solid-state battery) was fabricated.

### Examples 2 to 10, Comparative Examples 1 to 9, and Reference Example 1

The time of pulverization by the bead mill was changed such that the average major axis length R1 of the Si-based active materials indicated in Table 1 was obtained. Furthermore, the NV value of the slurry, the slurry delivery amount, and the drying temperature were changed to prepare composite particles such that the average major axis length R2 of the composite particles indicated in Table 1 was obtained. An evaluation battery was fabricated in the same manner as in Example 1, except that these composite particles were used.

### Evaluation

### Microscopic Observation

A cross section was taken from the obtained evaluation battery, and the cross section of the negative electrode layer was observed with an SEM to measure R1, R2 and R1/R2. Furthermore, the aspect ratio of the composite particles was also measured for Examples 1, 3, and 4 and Comparative Examples 2, 6, and 7. The results are indicated in Table 1. The average major axis length R2 of the composite particles was calculated by selecting the top 50 composite particles having the greatest major axis length r2 from the composite particles included in the observation field of the SEM image and averaging the major axis lengths r2 of the selected composite particles. The average major axis length R1 of the Si-based active materials was calculated by the method described above using the 50 selected composite particles.

### Expansion Amount

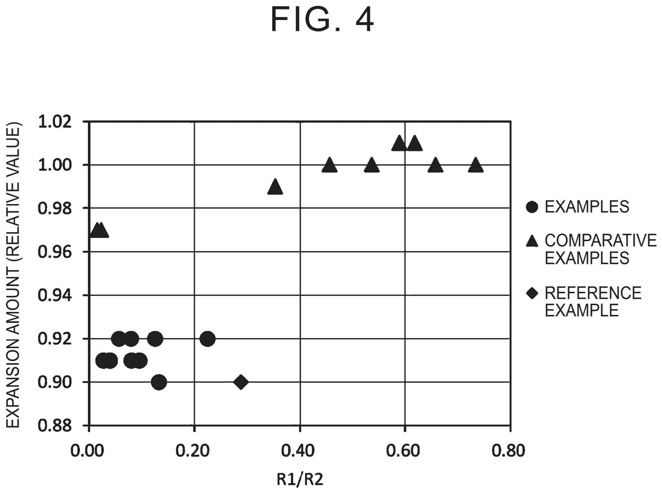

Each of the fabricated evaluation batteries was charged, and the amount of increase in restraining pressure measured using a load cell was evaluated as the expansion amount. The results are indicated in Table 1 and FIG. 4. The amount of increase in restraining pressure (expansion amount) of Comparative Example 1 was used as the standard for the evaluation.

**Table 1**

| | R2 (µm) | R1 (µm) | R1/R2 | Aspect ratio | Expansion amount (relative value) |
|---|---|---|---|---|---|
| Comp. Ex. 1 | 10.9 | 8.0 | 0.73 | 1.92 | 1.00 |
| Comp. Ex. 2 | 7.6 | 5.0 | 0.66 | - | 1.00 |
| Comp. Ex. 3 | 13.1 | 8.1 | 0.62 | 2.20 | 1.01 |
| Comp. Ex. 4 | 9.5 | 5.6 | 0.59 | 1.99 | 1.01 |
| Comp. Ex. 5 | 5.4 | 2.9 | 0.54 | - | 1.00 |
| Comp. Ex. 6 | 7.0 | 3.2 | 0.46 | - | 1.00 |
| Comp. Ex. 7 | 13.6 | 4.8 | 0.35 | - | 0.99 |
| Ref. Ex. 1 | 11.1 | 3.2 | 0.29 | - | 0.90 |
| Ex. 1 | 4.9 | 1.1 | 0.22 | - | 0.92 |
| Ex. 2 | 6.8 | 0.9 | 0.13 | 1.58 | 0.90 |
| Ex. 3 | 4.8 | 0.6 | 0.13 | - | 0.92 |
| Ex. 4 | 12.6 | 1.2 | 0.10 | - | 0.91 |
| Ex. 5 | 10.1 | 0.8 | 0.08 | - | 0.92 |
| Ex. 6 | 5.1 | 0.2 | 0.04 | 1.58 | 0.91 |
| Ex. 7 | 7.5 | 0.6 | 0.08 | 1.66 | 0.91 |
| Ex. 8 | 10.6 | 0.6 | 0.06 | - | 0.92 |
| Ex. 9 | 10.2 | 0.4 | 0.04 | - | 0.91 |
| Ex. 10 | 7.4 | 0.2 | 0.03 | - | 0.91 |
| Comp. Ex. 8 | 13.1 | 0.3 | 0.02 | - | 0.97 |
| Comp. Ex. 9 | 13.0 | 0.2 | 0.02 | - | 0.97 |

As indicated in Table 1 and FIG. 4, the expansion amount was suppressed in the battery including the negative electrode layer according to the present disclosure, suggesting that the amount of change in volume of the negative electrode layer according to the present disclosure was suppressed.

## Claims

1. A negative electrode layer (22) comprising composite particles (10), wherein
the composite particles (10) are particles in which a plurality of Si-based active materials (1) is aggregated,
when an average major axis length of the Si-based active materials (1) is R1 and an average major axis length of the composite particles (10) is R2, the average major axis lengths R1 and R2 being obtained by observing a cross section of the negative electrode layer (22) and performing a measurement by a measurement method given below,
the average major axis length R1 and the average major axis length R2 satisfy 0.03 ≤ (R1/R2) < 0.29,
the measurement method including
acquiring the average major axis length R2 by measuring a major axis length r2 for each of the composite particles (10) and averaging the major axis lengths r2, and
acquiring the average major axis length R1 by selecting top 20% of the composite particles (10) having a greatest major axis length r2 from the composite particles (10), measuring a maximum major axis length r1 of the Si-based active materials (1) for each of the selected composite particles (10), and averaging the maximum major axis lengths r1.

2. The negative electrode layer (22) according to claim 1, wherein the average major axis length R1 and the average major axis length R2 satisfy (R1/R2) ≤ 0.25.

3. The negative electrode layer (22) according to claim 1, wherein the average major axis length R1 is 0.2 µm or more and 3.5 µm or less.

4. The negative electrode layer (22) according to claim 1, wherein the average major axis length R2 is 4.5 µm or more and 13.0 µm or less.

5. The negative electrode layer (22) according to claim 1, wherein the composite particles (10) contain a binder.

6. The negative electrode layer (22) according to claim 1, wherein an aspect ratio of the composite particles (10) is 1.40 or more and 1.80 or less.

7. The negative electrode layer (22) according to claim 1, wherein the Si-based active materials (1) have voids inside.

8. The negative electrode layer (22) according to claim 1, wherein the negative electrode layer (22) contains an electrolyte and a conductive additive.

9. A battery (20) comprising:
a positive electrode layer (21);
a negative electrode layer (22); and
an electrolyte layer (23) disposed between the positive electrode layer (21) and the negative electrode layer (22), wherein
the negative electrode layer (22) is the negative electrode layer (22) according to any one of claims 1 to 8.

10. The battery (20) according to claim 9, wherein the electrolyte layer (23) contains a liquid electrolyte.

11. A solid-state battery, comprising:
a positive electrode layer (21);
a negative electrode layer (22); and
a solid electrolyte layer disposed between the positive electrode layer (21) and the negative electrode layer (22) and containing a solid electrolyte, wherein
the negative electrode layer (22) is the negative electrode layer (22) according to any one of claims 1 to 8.

12. A method of producing a negative electrode layer (22), the negative electrode layer being the negative electrode layer (22) according to any one of claims 1 to 8, the method comprising:
preparing a negative electrode mixture containing the composite particles (10); and
preparing the negative electrode layer (22) using the negative electrode mixture.
